# EUROPEAN PATENT APPLICATION

(11) **EP 4 223 510 A1**
(43) Date of publication of application: **09.08.2023**
(21) Application number: 21935086.5
(22) Date of filing: 24.08.2021
(51) Int. Cl.: B32B 25/08, B32B 7/12, C08L 9/00, C08L 83/00, H01M 8/0284, H01M 8/0286, H01M 8/10

(54) **MULTILAYER BODY**

(30) Priority: 31.03.2021 JP 2021059345
(71) Applicant: Sumitomo Riko Company Limited, Komaki-shi, Aichi 485-8550 (JP)
(72) Inventor: TANIGUCHI Shota, Komaki-shi, Aichi 485-8550 (JP); YAMAMOTO Kenji, Komaki-shi, Aichi 485-8550 (JP)
(74) Representative: Becker, Eberhard
(86) International application number: PCT/JP2021/030926
(87) International publication number: WO 2022/208926

(57) **Abstract**

A multilayer body that is obtained by bonding a separator 5, which serves as a base material, and a lip 4b, which serves as a sealing member, to each other by the intermediary of an adhesive layer 6, wherein: the lip 4b is formed of a rubber composition that contains the component (A) described below; and the adhesive layer 6 is formed of an adhesive that is mainly composed of the component (α) described below. Consequently, this multilayer body exhibits high acid-resistant adhesion at high temperatures, thereby having excellent long-term bonding reliability and excellent sealing properties. (A): A rubber component that is composed of at least one of an ethylene-propylene-diene rubber and an ethylene-butene-diene rubber. (α): A copolymerized oligomer-type silane coupling agent that comprises a specific hydrophilic functional group and a specific hydrophobic functional group at a specific ratio.

## Description

### [Technical Field]

The present disclosure relates to a multilayer body in which a base material formed of a metal or the like and a sealing member are bonded together with an adhesive layer therebetween, and specifically, to a multilayer body for sealing a fuel cell in which a fuel cell base material such as a metal separator and a rubber sealing member are bonded together with an adhesive layer therebetween.

### [Background Art]

Fuel cells, which generate electricity through a gas electrochemical reaction, have high power generation efficiency, emit clean gas, and have very little impact on the environment. Among these, polymer electrolyte fuel cells can operate at relatively low temperatures and have large power densities. Therefore, they are expected to be used in various applications such as power generation and automobile power sources.

In a polymer electrolyte fuel cell, a cell in which a membrane electrode assembly (MEA) or the like is interposed between separators (separators formed of a metal or the like) serves as a power generation unit. The MEA includes a polymer membrane (electrolyte membrane) as an electrolyte and a pair of electrode catalyst layers [a fuel electrode (anode) catalyst layer and an oxygen electrode (cathode) catalyst layer] arranged on both sides of the electrolyte membrane in the thickness direction. A porous layer (gas diffusion layer) for diffusing of a gas is additionally arranged on the surface of the pair of electrode catalyst layers. A fuel gas such as hydrogen is supplied to the side of the fuel electrode, and an oxidant gas such as oxygen or air is supplied to the side of the oxygen electrode. Power generation is performed according to an electrochemical reaction at a three-phase interface between the supplied gas, the electrolyte and the electrode catalyst layer. The polymer electrolyte fuel cell is formed by tightening a cell multilayer body in which the plurality of cells are laminated with end plates or the like arranged at both ends in the cell lamination direction.

In the separator, a flow path for a gas supplied to each electrode and a flow path for a refrigerant for alleviating heat generation during power generation are formed. In addition, since the electrolyte membrane has proton conductivity when it contains water, it is necessary to keep the electrolyte membrane in a wet state during operation. Therefore, in order to prevent mixtures of gases and of a gas and a refrigerant from leaking and to keep the inside of a cell in a wet state, it is important to secure sealing properties around the MEA and the porous layer and between the adjacent separators, and for that reason, a sealing member (gasket) for sealing each of the above parts is required.

Thus, in order to improve the sealing properties, a sealing member is generally bonded to the separator, and examples of such methods include a method of applying an adhesive to the interface between the separator and the sealing member and kneading an adhesive component into the material of the sealing member (for example, internally adding a silane coupling agent) (for example, refer to Patent Literature 1 and 2).

### [Citation List]

### [Patent Literature]

[Patent Literature 1]
   Japanese Patent Laid-Open No. 2011-249283
[Patent Literature 2]
   Japanese Patent Laid-Open No. 2014-65248

### [Summary of Invention]

### [Technical Problem]

The sealing member is also exposed to water generated according to power generation, and since this water contains sulfonic acid and the like eluted from the electrolyte membrane, acid-resistant adhesion is also required for adhesion of the sealing member to the separator.

Particularly, in recent years, power generation temperatures have tended to rise for power generation efficiency, and stronger acid-resistant adhesion has become required so that favorable adhesion can be obtained even at such high temperatures.

As described above, when an adhesive is applied to the interface between the separator and the sealing member, at high temperatures resulting from the rise in power generation temperatures and the like, since water and an acid easily enter the adhesive layer formed of the adhesive and attack the bonding between the adhesive layer and the sealing member and the bonding between the adhesive layer and the separator, it becomes difficult to maintain long-term adhesion.

On the other hand, when an adhesive component (a silane coupling agent, etc.) is internally added to the sealing member to improve adhesion, there is a trade-off relationship with a compression permanent strain property (low settling property) which is important in the sealing performance of the sealing member. Therefore, when the acid-resistant adhesion is improved by this method, it is difficult to achieve both the adhesion and sealing properties.

In addition, in the technology disclosed in the prior patent literature, acid-resistant adhesion in which acid erosion can be withstood at high temperatures as described above is not considered, and in actuality, the result of acid-resistant adhesion at high temperatures as described above is not favorable and there is still room for improvement in this respect.

The present disclosure has been made in view of such circumstances, and provides a multilayer body having high acid-resistant adhesion at high temperatures, excellent long-term bonding reliability, and excellent sealing properties.

### [Solution to Problem]

The inventors conducted extensive studies in order to address the above problem. In the course of the studies, they found that, when a sealing member whose rubber component is ethylene-propylene-diene rubber (EPDM) or ethylene-butene-diene rubber (EBT) is used as a sealing member, and the sealing member is bonded to a base material such as a separator with a layer composed of a specific adhesive (primer), specifically, a layer composed of an adhesive mainly composed of a copolymerized oligomer type silane coupling agent (α) having a hydrophilic functional group and a hydrophobic functional group at a specific ratio, therebetween, to form a multilayer body for sealing, a desired objective can thus be achieved.

That is, the inventors conducted various experiments and research, and as a result, found that the balance between the amount of hydrophilic functional groups and the amount of hydrophobic functional groups in the molecule of the silane coupling agent used in the adhesive is a very important requirement for strong acid-resistant adhesion at high temperatures. Then, they found that, when the hydrophilic functional group and the hydrophobic functional group in the molecule of the silane coupling agent are set as specific functional groups shown in the following (a) and (b) and the molar ratio of the substance amount (mol) of hydrophilic functional groups to the substance amount (mol) of the hydrophobic functional group is set to a specific ratio as shown in the following (α), hydrophobicity is imparted by the hydrophobic functional group, and as a result, water is prevented from entering the adhesive layer, water resistance and acid resistance are improved, and the hydrophilic functional group reacts with a filler (carbon black, etc.) in the base material and the sealing member, and thus contributes to interlayer adhesion. In addition, they found that, when the hydrophobic functional group reacts with a rubber component in the sealing member, it thus interacts with both the sealing member and the base material, and exhibits an effect of improving acid-resistant adhesion even at high temperatures without impairing sealing performance of the sealing member.

That is, in order to achieve the above objective, the gist of the present disclosure includes the following [1] to [7].
[1] A multilayer body obtained by bonding a base material and a sealing member together with an adhesive layer therebetween,
   wherein the sealing member is composed of a rubber composition containing the following component (A), and the adhesive layer is composed of an adhesive composed of the following component (α) as a main component:
   (A) a rubber component composed of at least one of ethylene-propylene-diene rubber and ethylene-butene-diene rubber,
      (α) a silane coupling agent which is a copolymerized oligomer type silane coupling agent having a hydrophilic functional group and a hydrophobic functional group in which the hydrophilic functional group is the following (a), the hydrophobic functional group is the following (b), and a molar ratio (Ma/Mb) of a substance amount Ma (mol) of hydrophilic functional groups to a substance amount Mb (mol) of hydrophobic functional groups contained in 1 mol of the molecule is 0.33 to 3.00,
      (a) at least one functional group selected from the group consisting of a silanol group, an alkoxy group, an amino group, an isocyanate group, an epoxy group, a ureido group, a carboxyl group, and a hydroxy group, and including at least a silanol group or alkoxy group,
      (b) at least one selected from the group consisting of a vinyl group, a (meth)acryloyl group, a maleimide group, a methyl group, an ethyl group, a styryl group, a phenyl group, and a mercapto group.
[2] The multilayer body according to [1],
   wherein the rubber component (A) contains ethylene-propylene-diene rubber in which the ethylene content is 50 weight% or less and the propylene content is 42 weight% or more.
[3] The multilayer body according to [1] or [2],
   wherein the rubber component (A) is rubber having a diene content of 3.0 to 15 weight%.
[4] The multilayer body according to any one of [1] to [3],
   wherein the rubber composition further contains a plasticizer having a pour point of - 30°C or lower.
[5] The multilayer body according to any one of [1] to [4],
   wherein the rubber composition further contains carbon black, and the proportion of the rubber component (A) in the entire rubber composition is 40 weight% or more, and the proportion of the carbon black is 15 weight% or more.
[6] The multilayer body according to any one of [1] to [5],
   wherein the rubber composition is a rubber composition containing no silane coupling agent.
[7] The multilayer body according to any one of [1] to [6], which is a member for constituting a fuel cell.

### [Advantageous Effects of Invention]

As described above, since the multilayer body of the present disclosure is obtained by bonding a sealing member containing a predetermined rubber component and a base material together with a specific adhesive layer therebetween, it has high acid-resistant adhesion at high temperatures and excellent long-term bonding reliability, and can exhibit excellent sealing performance.

### [Brief Description of Drawings]

FIG. 1 is a cross-sectional view showing an example of a member for constituting a fuel cell according to the present disclosure.
FIG. 2 is a cross-sectional view showing an example using the member for constituting a fuel cell according to the present disclosure.

### [Description of Embodiments]

Next, embodiments of the present disclosure will be described in detail. However, the present disclosure is not limited to the embodiments.

The multilayer body of the present disclosure is a multilayer body for sealing in which a base material and a sealing member are bonded together with an adhesive layer therebetween, the sealing member is composed of a rubber composition containing the following component (A), and the adhesive layer is composed of an adhesive composed of the following component (α) as a main component.
(A) a rubber component composed of at least one of ethylene-propylene-diene rubber and ethylene-butene-diene rubber.
   (α) a silane coupling agent which is a copolymerized oligomer type silane coupling agent having a hydrophilic functional group and a hydrophobic functional group in which the hydrophilic functional group is the following (a), the hydrophobic functional group is the following (b), and a molar ratio (Ma/Mb) of a substance amount Ma (mol) of hydrophilic functional groups to a substance amount Mb (mol) of hydrophobic functional groups contained in 1 mol of the molecule is 0.33 to 3.00.
   (a) at least one functional group selected from the group consisting of a silanol group, an alkoxy group, an amino group, an isocyanate group, an epoxy group, a ureido group, a carboxyl group, and a hydroxy group, and including at least a silanol group or alkoxy group.
   (b) at least one selected from the group consisting of a vinyl group, a (meth)acryloyl group, a maleimide group, a methyl group, an ethyl group, a styryl group, a phenyl group, and a mercapto group.

Here, the "main component" of the adhesive, which is a material for forming the adhesive layer, indicates a main component constituting the adhesive, and indicates that 50 weight% or more of the adhesive (excluding the solvent) is a silane coupling agent shown in the above (α). Here, the meaning of the "main component" includes the adhesive (excluding the solvent) composed of only the silane coupling agent shown in the above (α).

### <Sealing member>

First, respective materials of the rubber composition for forming the sealing member will be described.

### <<Rubber component (A)>>

As the rubber component (A), at least one of ethylene-propylene-diene rubber (EPDM) and ethylene-butene-diene rubber (EBT) is used. In consideration of low-temperature sealing properties, EBT is preferably used as the rubber component (A).

The diene content (weight percentage of the diene component) of EPDM and EBT is preferably in a range of 3.0 to 15 weight% and more preferably in a range of 3.5 to 14.5 weight%. That is, with such a diene content, both adhesion and sealing properties with the adhesive layer are easily achieved.

The diene component of EPDM and EBT is, for example, preferably a diene monomer having 5 to 20 carbon atoms, and specific examples thereof include 1,4-pentadiene, 1,4-hexadiene, 1,5-hexadiene, 2,5-dimethyl-1,5-hexadiene, 1,4-octadiene, 1,4-cyclohexadiene, cyclooctadiene, dicyclopentadiene (DCP), 5-ethylidene-2-norbornene (ENB), 5-vinyl-2-norbornene (VNB), 5-butylidene-2-norbomene, 2-methallyl-5-norbornene, and 2-isopropenyl-5-norbomene.

When the EPDM has an ethylene content (weight percentage of the ethylene component) of 50 weight% or less and a propylene content (weight percentage of the propylene component) of 42 weight% or more, this is preferable because the crystallinity of the polymer is lowered and sealing properties at very low temperatures are improved. In addition, in order to further improve low temperature resistance and tensile properties required for the sealing member, the ethylene content is more preferably 35 to 50 weight%, and still more preferably in a range of 40 to 50 weight%, and the propylene content is more preferably 42 to 55 weight%, and still more preferably in a range of 44 to 50 weight%.

When the EBT has an ethylene content (weight percentage of the ethylene component) of 55 weight% or less and a butene content (weight percentage of the butene component) of 35 weight% or more, this is preferable because the crystallinity of the polymer is lowered and sealing properties at very low temperatures are improved. In addition, in order to further improve low temperature resistance and tensile properties required for the sealing member, the ethylene content is more preferably 35 to 55 weight%, and more preferably in a range of 40 to 53 weight%, and the butene content is more preferably 35 to 55 weight%, and still more preferably in a range of 38 to 50 weight%.

In the present disclosure, the rubber composition for forming the sealing member may contain, in addition to the rubber component (A), various additives used in a general rubber composition such as a plasticizer (B), a filler (C), a crosslinking agent (an organic peroxide, etc.), a crosslinking assistant, and an antioxidant.

Here, when an adhesive component (silane coupling agent) is excluded from (not contained in) the rubber composition, this is preferable because a compression permanent strain property (low settling property) important in the sealing performance of the sealing member is maintained. In addition, as described above, when no adhesive component is contained, this is preferable because the releasability when the sealing member is die-molded is improved.

The rubber component (A) is a main component of the rubber composition, and generally, its proportion is 40 weight% or more of the entire rubber composition. The proportion of the rubber component (A) is preferably 40 to 80 weight% of the entire rubber composition, and more preferably 45 to 75 weight% of the entire rubber composition.

### <<Plasticizer (B)>>

Examples of plasticizers (B) include petroleum-based plasticizers such as process oil, lubricating oil, paraffin, liquid paraffin, and Vaseline, fatty oil plasticizers such as castor oil, linseed oil, rapeseed oil, and coconut oil, waxes such as tall oil, sub, beeswax, carnauba wax, and lanolin, and linoleic acid, palmitic acid, stearic acid, and lauric acid. These may be used alone or two or more thereof may be used in combination.

The amount of the plasticizer (B) added with respect to 100 parts by weight of the rubber component (A) is generally 60 parts by weight or less and more preferably in a range of 5 to 50 parts by weight.

Among the plasticizers (B), a plasticizer having a pour point of -30°C or lower is preferable, and a plasticizer having a pour point of -40°C or lower is more preferable. Examples of such plasticizers include poly-α-olefin, dioctyl phthalate (DOP), dioctyl adipate (DOA), dioctyl sebacate (DOS), and dibutyl sebacate (DBS). These may be used alone or two or more thereof may be used in combination. Among these, poly-α-olefin is preferable because it has favorable compatibility with the rubber component (A) and is unlikely to bleed. Poly-α-olefin is obtained by polymerizing α-olefins having 6 to 16 carbon atoms. In poly-α-olefins, the lower the molecular weight, the lower the viscosity and the lower the pour point.

As described above, a plasticizer having a lower pour point is less likely to cure at very low temperatures. Therefore, a plasticizer having a lower pour point has a greater crystallization inhibitory effect of the rubber component at very low temperatures. On the other hand, the lower the pour point, the more easily the plasticizer volatizes during an operation of the fuel cell or the like. Therefore, it is desirable that the pour point of the plasticizer be -80°C or higher.

Here, the pour point can be measured according to JIS K 2269 (1987).

In addition, the kinematic viscosity of the plasticizer (B) at 40°C is preferably in a range of 8 to 500 mm²/s, and more preferably in a range of 9 to 460 mm²/s. That is, this is because, when a plasticizer exhibiting such a kinematic viscosity is used, it has favorable compatibility with rubber and low volatility and thus it has an excellent compression permanent strain property (low settling property). Here, the kinematic viscosity of the plasticizer (B) is measured according to JIS K 2283.

### <<Filler (C)>>

Examples of fillers (C) include carbon black and silica. The grade of the carbon black is not particularly limited, and may be appropriately selected from among SAF grade, ISAF grade, HAF grade, MAF grade, FEF grade, GPF grade, SRF grade, FT grade, and MT grade.

In consideration of adhesion with the adhesive layer mainly composed of the component (α) and the like, the filler (C) is preferably a filler containing carbon black, and the filler (C) may be only carbon black. Here, when the proportion of the rubber component (A) in the entire rubber composition for forming a sealing member is 40 weight% or more and the proportion of the carbon black is 15 weight% or more, this is preferable in consideration of the adhesion with the adhesive layer mainly composed of the component (α) and the like.

Here, the proportion of the entire filler (C) in the entire rubber composition is generally in a range of 15 to 45 weight% and preferably in a range of 20 to 40 weight%.

In addition, the proportion of carbon black in the entire rubber composition is more preferably 15 to 45 weight% and particularly preferably in a range of 15 to 40 weight%.

### <<Crosslinking agent>>

The crosslinking agent is preferably an organic peroxide and one having an one-hour half-life temperature of 160°C or lower is preferable. Examples of organic peroxides include dialkyl peroxide, peroxyketal, peroxyester, ketone peroxide, diacyl peroxide, and peroxydicarbonate. These may be used alone or two or more thereof may be used in combination. Among these, because the rubber composition kneaded with a crosslinking agent has excellent scorch resistance and reactivity with the adhesive, it is preferable to use at least one selected from the group consisting of dialkyl peroxide, peroxyketal, and peroxyester and having an one-hour half-life temperature of 100 to 160°C, and it is particularly preferable to use at least one selected from the group consisting of dialkyl peroxide, peroxyketal, and peroxyester and having an one-hour half-life temperature of 110 to 160°C.

Here, the "half-life" is the time required for the concentration of an organic peroxide to reach half of the initial value. Therefore, the "half-life temperature" is an index indicating the decomposition temperature of the organic peroxide. The "one-hour half-life temperature" is the temperature at which the half-life is 1 hour. That is, the lower the one-hour half-life temperature, the easier it decomposes at low temperatures and the faster the reaction rate. If the one-hour half-life temperature is too low, scorching tends to occur, and the reaction with the adhesive is unlikely to occur.

Examples of dialkyl peroxides include di(2-t-butylperoxypropyl)benzene, dicumyl peroxide, 2,5-dimethyl-2,5-di(t-butylperoxy)hexane, t-butyl cumyl peroxide, di-t-hexyl peroxide, di-t-butyl peroxide, and 2,5-dimethyl-2,5-di(t-butylperoxy)hexyne-3.

Examples of peroxyketals include n-butyl-4,4-di(t-butylperoxy)valerate, 2,2-di(t-butylperoxy)butane, 2,2-di(4,4-di(t-butylperoxy)cyclohexyl)propane, 1,1-di(t-butylperoxy)cyclohexane, 1,1-di(t-hexylperoxy)cyclohexane, 1,1-di(t-hexylperoxy)-3,3,5-trimethylcyclohexane, and 1,1-di(t-butylperoxy)-2-methylcyclohexane.

Examples of peroxyesters include t-butyl peroxybenzoate, t-butyl peroxyacetate, t-propyl peroxyacetate, t-hexyl peroxybenzoate, 2,5-dimethyl-2,5-di(benzoylperoxy)hexane, t-butyl peroxy-2-ethylhexyl monocarbonate, t-butyl peroxylaurate, t-butyl peroxy isopropyl monocarbonate, t-butyl peroxy-3,5,5-trimethylhexanoate, t-butyl peroxymaleate, and t-hexyl peroxy isopropyl monocarbonate.

Among these, 1,1-di(t-hexylperoxy)cyclohexane, 1,1-di(t-butylperoxy)cyclohexane, n-butyl-4,4-di(t-butylperoxy)valerate, 2,2-di(t-butylperoxy)butane, t-butyl peroxybenzoate, t-butyl peroxy-2-ethylhexyl monocarbonate, t-hexyl peroxybenzoate, 2,5-dimethyl-2,5-di(benzoylperoxy)hexane, di(2-t-butylperoxypropyl)benzene, dicumyl peroxide, 2,5-dimethyl-2,5-di(t-butylperoxy)hexane, t-butyl cumyl peroxide, di-t-hexyl peroxide, di-t-butyl peroxide, and 2,5-dimethyl-2,5-di(t-butylperoxy)hexyne-3 are preferable because they have high reactivity with the rubber component (A). 1,1-di(t-butylperoxy)cyclohexane, n-butyl-4,4-di(t-butylperoxy)valerate, 1,1-di(t-hexylperoxy)cyclohexane, t-hexyl peroxybenzoate, 2,5-dimethyl-2,5-di(benzoylperoxy)hexane, 2,5-dimethyl-2,5-di(benzoylperoxy)hexane, di(2-t-butylperoxypropyl)benzene, dicumyl peroxide, 2,5-dimethyl-2,5-di(t-butylperoxy)hexane, and t-butyl cumyl peroxide are particularly preferable.

The amount of the crosslinking agent (in the case of a raw component with a purity of 100%) added with respect to 100 parts by weight of the rubber component (A) is preferably in a range of 0.4 to 12 parts by weight. If the amount of the crosslinking agent added is too small, it tends to be difficult to sufficiently proceed with the crosslinking reaction, and if the amount of the crosslinking agent added is too large, the crosslinking density tends to rise sharply during the crosslinking reaction, which tends to decrease the adhesive strength.

Here, as the organic peroxide, when a raw component with a purity of 100% is not used, addition is performed so that the proportion in terms of the raw component is within the above range.

### <<Crosslinking assistant>>

Examples of crosslinking assistants include maleimide compounds, triallyl cyanurate (TAC), triallyl isocyanurate (TAIC), trimethylolpropane trimethacrylate (TMPT), bifunctional (meth)acrylate, and 1,2-polybutadiene. These may be used alone or two or more thereof may be used in combination. Among these, it is preferable to use a maleimide compound and TAIC because they have a strong effect of improving the crosslinking density and the strength.

The amount of the crosslinking assistant added with respect to 100 parts by weight of the rubber component (A) is preferably 5 parts by weight or less. If the amount of the crosslinking assistant added is too large, the crosslinking density tends to rise sharply during the crosslinking reaction, which tends to reduce the tensile elongation and adhesive strength.

### <<Antioxidant>>

Examples of antioxidants include phenol-based, amine-based, imidazole-based, phosphoric acid-based antioxidants, and waxes. The amount of the antioxidant added with respect to 100 parts by weight of the rubber component (A) is generally in a range of 0.1 to 10 parts by weight.

### <<Preparation of rubber composition>>

A rubber composition for forming the sealing member is prepared by preparing the rubber component (A), as necessary, various additives such as a plasticizer (B), a filler (C), an organic peroxide (crosslinking agent), a crosslinking assistant, an antioxidant, and a processing aid, and kneading them using a roller, a kneader, a banbury mixer or the like.

Here, as will be described below, the rubber composition is subjected to die molding, press molding or the like to form a sealing member having a predetermined thickness.

### <Adhesive layer>

Next, an adhesive layer for bonding the sealing member and the base material will be described.

As the adhesive for forming the adhesive layer, an adhesive composed of the following component (α) as a main component is used.
(α) a silane coupling agent which is a copolymerized oligomer type silane coupling agent having a hydrophilic functional group and a hydrophobic functional group in which the hydrophilic functional group is the following (a), the hydrophobic functional group is the following (b), and a molar ratio (Ma/Mb) of a substance amount Ma (mol) of hydrophilic functional groups to a substance amount Mb (mol) of hydrophobic functional groups contained in 1 mol of the molecule is 0.33 to 3.00.
(a) at least one functional group selected from the group consisting of a silanol group, an alkoxy group, an amino group, an isocyanate group, an epoxy group, a ureido group, a carboxyl group, and a hydroxy group, and including at least a silanol group or alkoxy group.
(b) at least one selected from the group consisting of a vinyl group, a (meth)acryloyl group, a maleimide group, a methyl group, an ethyl group, a styryl group, a phenyl group, and a mercapto group.

Here, in the present disclosure, "(meth)acryloyl group" refers to an acryloyl group or a methacryloyl group, and "(meth)acrylate" refers to acrylate or methacrylate.

As described above, the silane coupling agent shown in (α) has a single type or a plurality of types of hydrophilic functional groups shown in the above (a) (provided that a silanol group and an alkoxy group are essential, and the rest is optional) and also has a single type or a plurality of types of hydrophobic functional groups shown in the above (b).

Here, in consideration of the reactivity with the base material and the reactivity with the filler and the like in the sealing member, among the hydrophilic functional groups shown in the above (a), a silanol group (a hydroxy group constituting a silanol structure), an alkoxy group, an amino group, and an isocyanate group are preferable, and a silanol group, an alkoxy group, and an amino group are more preferable.

In addition, in consideration of the reactivity with the rubber component, the crosslinking agent, and the crosslinking assistant in the sealing member, among the hydrophobic functional groups shown in the above (b), a vinyl group, a (meth)acryloyl group, and a maleimide group are preferable, and a vinyl group is more preferable.

In addition, in order to obtain acid-resistant adhesion at high temperatures, in the silane coupling agent shown in the above (α), it is necessary to set a molar ratio (Ma/Mb) of a substance amount Ma (mol) of hydrophilic functional groups to a substance amount Mb (mol) of hydrophobic functional groups contained in 1 mol of the molecule to 0.33 to 3.00. For the same viewpoint, the molar ratio (Ma/Mb) is preferably in a range of 0.40 to 2.90 and more preferably in a range of 0.45 to 2.75.

In addition, in consideration of film-forming properties and the like, the silane coupling agent shown in the above (α) of a copolymerized oligomer type, that is, of a copolymerized oligomer, is used. That is, when a silane coupling agent having each functional group shown in the above (a) or (b) is subjected to an oligomerization reaction, the silane coupling agent shown in the above (α) can be obtained.

Among silane coupling agents having a hydrophilic functional group shown in the above (a), a silane coupling agent having a hydrophilic functional group other than a silanol group and an alkoxy group include, for example, 3-aminopropyltrimethoxysilane, 3-aminopropyltriethoxysilane, N-2-(aminoethyl)-3-aminopropylmethyldimethoxysilane, N-2-(aminoethyl)-3-aminopropyltrimethoxysilane, 3-triethoxysilyl-N-(1,3-dimethylbutylidene)propylamine, 3-isocyanatopropyltriethoxysilane, 3-ureidopropyltrialkoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-carboxypropyltrimethoxysilane, 3-carboxypropyltriethoxysilane, 3-hydroxypropyltrimethoxysilane, and 3-hydroxypropyltriethoxysilane. These may be used alone or two or more thereof may be used in combination. Among these, 3-aminopropyltrimethoxysilane, 3-aminopropyltriethoxysilane, N-2-(aminoethyl)-3-aminopropylmethyldimethoxysilane, N-2-(aminoethyl)-3-aminopropyltrimethoxysilane, and 3-isocyanatopropyltriethoxysilane are preferable.

Examples of silane coupling agents having a hydrophobic functional group shown in the above (b) include vinyltrimethoxysilane, vinyltriethoxysilane, 3-(meth)acryloxypropyltrimethoxysilane, 3-(meth)acryloxypropyltriethoxysilane, N-(trimethoxysilylpropyl)maleimide, N-(triethoxysilylpropyl)maleimide, p-styryltrimethoxysilane, p-styryltriethoxysilane, phenyltrimethoxysilane, phenyltriethoxysilane, 3-mercaptopropylmethyltrimethoxysilane, 3-mercaptopropylmethyltriethoxysilane, methyltrimethoxysilane, methyltriethoxysilane, ethyltrimethoxysilane, ethyltriethoxysilane, n-propyltrimethoxysilane, and n-propyltriethoxysilane. These may be used alone or two or more thereof may be used in combination. Among these, vinyltrimethoxysilane, vinyltriethoxysilane, 3-(meth)acryloxypropyltrimethoxysilane, 3-(meth)acryloxypropyltriethoxysilane, N-(trimethoxysilylpropyl)maleimide, and N-(triethoxysilylpropyl)maleimide are preferable.

During the oligomerization reaction, for example, 0.5 to 2.0 mol of a silane coupling agent having a hydrophilic functional group shown in the above (a) but not having the hydrophobic functional group with respect to 1.0 mol of the silane coupling agent having a hydrophobic functional group shown in the above (b) is used. In addition, 0.2 to 5.0 mol of water for hydrolysis is used per 1 mol of a total substance amount of the silane coupling agent having a hydrophilic functional group shown in the above (a) and the silane coupling agent having a hydrophobic functional group shown in the above (b). Here, among silane coupling agents having a hydrophilic functional group shown in the above (a), a silane coupling agent having a hydrophilic functional other than a silanol group and an alkoxy group does not necessarily have to be included.

Then, in the oligomerization reaction, the raw materials are put into a reaction container having a distillation device and a stirrer, and stirred at about 60°C for about 1 hour. Then, about 0.5 to 2.0 mol of an acid such as formic acid is added within 1 hour per 1 mol of a total substance amount of the silane coupling agent having a hydrophilic functional group shown in the above (a) and the silane coupling agent having a hydrophobic functional group shown in the above (b). The temperature at this time is kept at about 65°C. Stirring is additionally performed for 1 to 5 hours, the reaction proceeds, and at the same time, an alcohol produced through hydrolysis is distillated under a reduced pressure. Distillation is terminated when only water remains in the distilled water, dilution and adjustment are then performed so that the silane concentration is 30 to 80 weight%, and thereby a copolymerized oligomer (silane coupling agent (α)) can be obtained. This copolymerized oligomer is an oligomer that is soluble in an alcohol-based organic solvent such as methanol and ethanol. Here, the copolymerized oligomer is preferably a trimer or higher-order oligomer in order to improve film-forming properties, water resistance, and acid resistance when the adhesive is applied.

Here, as necessary, the adhesive is used as a solution diluted with an organic solvent so that the concentration of the copolymerized oligomer (silane coupling agent (α)) is about 0.5 to 25 weight%. Examples of organic solvents include alcohol-based organic solvents such as methanol, ethanol, isopropanol, and 2-ethoxyethanol (ethylene glycol monoethyl ether), and ketone organic solvents such as acetone, methyl ethyl ketone, and methyl isobutyl ketone.

In addition, in addition to the copolymerized oligomer and the organic solvent, a phenolic resin, a bismaleimide resin, a vinyl resin or the like may be added to the adhesive in order to prevent water from entering the adhesive layer, and improve water resistance and acid resistance by improving adhesion with the base material and securing hydrophobicity.

In addition, as the adhesive containing the copolymerized oligomer, a commercially available adhesive can be used without change. Specific examples include CHEMLOK 5151 (commercially available from LORD Far East, Inc.) [a molar ratio (Ma/Mb) of a substance amount Ma (mol) of hydrophilic functional groups to a substance amount Mb (mol) of hydrophobic functional groups contained in 1 mol of the copolymerized oligomer: 1.13], MEGUM 3290 (commercially available from Dow Chemical Company) [a molar ratio (Ma/Mb) of a substance amount Ma (mol) of hydrophilic functional groups to a substance amount Mb (mol) of hydrophobic functional groups contained in 1 mol of the copolymerized oligomer: 2.70], X-12-1048 (commercially available from Shin-Etsu Chemical Co., Ltd.) [ a molar ratio (Ma/Mb) of a substance amount Ma (mol) of hydrophilic functional groups to a substance amount Mb (mol) of hydrophobic functional groups contained in 1 mol of the copolymerized oligomer: 3.00], and KR-513 (commercially available from Shin-Etsu Chemical Co., Ltd.) [a molar ratio (Ma/Mb) of a substance amount Ma (mol) of hydrophilic functional groups to a substance amount Mb (mol) of hydrophobic functional groups contained in 1 mol of the copolymerized oligomer: 0.49].

### <Base material>

Next, the base material to which the sealing member is to be bonded will be described.

Examples of substances of the base material include titanium, stainless steel (SUS304, etc.), copper, magnesium, aluminum, carbon, graphite, and conductive resins (thermoplastic resins or thermosetting resins mixed with graphite, polyacrylonitrile-based carbon fibers or the like). Here, in consideration of acid resistance, base materials formed of titanium (pure titanium or titanium alloy), stainless steel (particularly, austenite-based SUS), or a conductive resin are preferable.

In addition, in consideration of conduction reliability, a base material having a carbon thin film such as a DLC film (diamond-like carbon film) or graphite film formed by a treatment such as a physical vapor deposition (PVD) method or a chemical vapor deposition (CVD) method on its surface is preferable. The thickness of the carbon thin film is preferably 10 to 500 nm.

### (Method of producing multilayer body)

Next, a method of producing a multilayer body of the present disclosure will be described.

First, as described above, a rubber composition for forming a sealing member is prepared. This rubber composition is subjected to die molding, press molding or the like to produce an (uncrosslinked) flat rubber member having a predetermined thickness.

Here, the flat rubber member may be crosslinked or uncrosslinked, and the uncrosslinked flat rubber member is preferable in order to improve adhesion.

Then, an adhesive mainly composed of the silane coupling agent (α) is applied to the base material such as a stainless steel plate using any method such as a spray method, an immersion method or a roll coating method, and as necessary, dried at room temperature, and the flat rubber member is then laminated on the surface thereof, and the laminate is crosslinked and bonded under predetermined conditions (130 to 200°C×3 to 30 minutes, etc.), and thereby a multilayer body in which the base material and the crosslinked rubber member (sealing member) are bonded can be produced.

Here, if the crosslinked rubber member is molded into a predetermined shape in advance according to the shape of the sealing part, this is preferable because complicated positioning is not necessary, continuous processing is facilitated, and productivity is improved.

In addition, as described above, the crosslinked rubber member may be formed by crosslinking the prepared rubber composition using a predetermined mold on the base material to which the adhesive is applied. Accordingly, the crosslinking adhesion becomes stronger.

The thickness of each member in the multilayer body of the present disclosure and the like vary depending on the sealing part in which the multilayer body is used, and the thickness of the base material is generally 0.05 to 5 mm and preferably 0.1 to 3 mm, the thickness of the sealing member is generally 0.2 to 5 mm, and preferably 0.5 to 3 mm, and the thickness of the adhesive layer is generally 1×10⁻⁵ to 0.025 mm and preferably 2×10⁻⁵ to 0.002 mm. Here, the adhesive layer may be multiple layers (two or more layers), and a single layer is preferable because a coating process can be shortened.

The multilayer body of the present disclosure is used for sealing between members (base material) made of a metal or the like, and is suitable for use as a member for constituting a fuel cell used in a fuel cell sealing component to be described below. Examples of application target fuel cells include polymer electrolyte fuel cells (PEFC) (including direct-methanol fuel cells (DMFC)).

### <Member for constituting fuel cell>

Examples of members for constituting a fuel cell include a member in which a fuel cell base material and a sealing member for sealing the base material are bonded together with an adhesive layer therebetween.

Here, the sealing member is composed of a rubber composition containing the rubber component (A), and the adhesive layer is composed of an adhesive mainly composed of the silane coupling agent (α).

Here, the method of producing a member for constituting a fuel cell corresponds to the method of producing a multilayer body described above.

The fuel cell base material varies depending on the type, structure and the like of the fuel cell, and examples thereof include a separator, a gas diffusion layer (GDL), and an MEA (electrolyte membrane, electrode).

The separator formed of a metal such as titanium or stainless steel (SUS304, etc.) or formed of a conductive resin (a thermoplastic resin or thermosetting resin mixed with graphite, polyacrylonitrile-based carbon fibers or the like) is preferable. In addition, in consideration of conduction reliability, a separator having a carbon thin film such as a DLC film or graphite film formed by a treatment such as a PVD method or a CVD method on its surface is preferable. The thickness of the carbon thin film is preferably 10 to 500 nm.

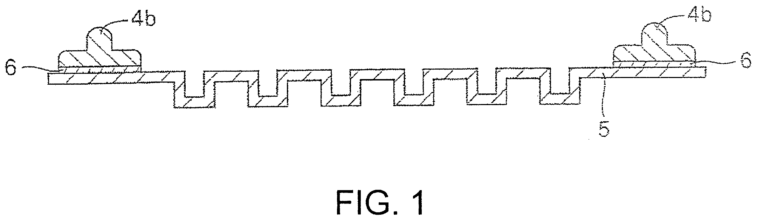

FIG. 1 shows an example of the member for constituting a fuel cell according to the present disclosure. FIG. 1 is a rectangular thin plate member in which a rectangular lip 4b having a convex cross-sectional shape is provided on the periphery of a separator 5 having an uneven cross-sectional shape in which a total of six grooves extending in the longitudinal direction are recessed with an adhesive layer 6 therebetween. Here, the lip 4b is a sealing member composed of a rubber composition containing the rubber component (A), and the adhesive layer 6 is composed of an adhesive mainly composed of the silane coupling agent (α).

### <Fuel cell sealing component>

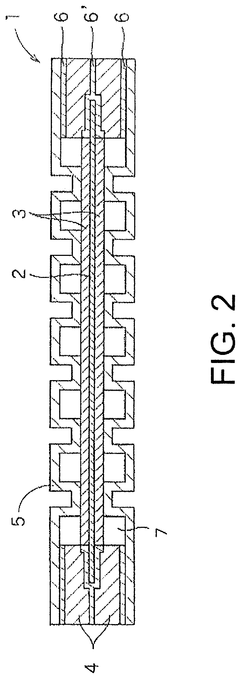

Next, FIG. 2 shows an example of a fuel cell sealing component using the member for constituting a fuel cell according to the present disclosure. FIG. 2 mainly shows a single cell 1 in a fuel cell in which a plurality of cells are laminated, and the cell 1 includes an MEA 2, a gas diffusion layer (GDL) 3, a sealing member 4, a separator 5, and an adhesive layer 6.

Here, the sealing member 4 is composed of a rubber composition containing the rubber component (A), and the adhesive layer 6 is composed of an adhesive mainly composed of the silane coupling agent (α).

As shown in FIG. 2, examples of fuel cell sealing components include a component in which the separator 5 and the sealing member 4 are bonded together with the adhesive layer 6 therebetween, a component in which the MEA 2 and the sealing member 4 are bonded together with the adhesive layer 6 therebetween, and a component in which the gas diffusion layer 3 and the sealing member 4 are bonded together with the adhesive layer 6 therebetween.

Here, the adhesive layer 6' for bonding adjacent sealing members 4 may be a layer composed of an adhesive mainly composed of the silane coupling agent (α), and may be, for example, an adhesive layer composed of a rubber paste, a rubber composition that is a liquid at room temperature (23°C) (liquid ethylene propylene rubber (liquid EPM), liquid EPDM, liquid acrylonitrile-butadiene rubber (liquid NBR), liquid hydrogenated acrylonitrile-butadiene rubber (liquid H-NBR), etc.).

Although not shown, the MEA 2 is composed of an electrolyte membrane and a pair of electrodes arranged on both sides of the electrolyte membrane in the laminate direction. The electrolyte membrane and the pair of electrodes have a rectangular thin plate shape. The gas diffusion layer 3 is arranged on both sides of the MEA 2 in the laminate direction. The gas diffusion layer 3 is a porous layer having a rectangular thin plate shape.

The separator 5 formed of a metal such as titanium or stainless steel (SUS304, etc.) or formed of a conductive resin (a thermoplastic resin or thermosetting resin mixed with graphite, polyacrylonitrile-based carbon fibers or the like) is preferable. In addition, in consideration of conduction reliability, a separator having a carbon thin film such as a DLC film or graphite film formed by a treatment such as a PVD method or a CVD method on its surface is preferable. The thickness of the carbon thin film is preferably 10 to 500 nm.

The separator 5 shows a rectangular thin plate shape in which a total of six grooves extending in the longitudinal direction are recessed, and due to the grooves, the cross section of the separator 5 has an uneven shape. The separators 5 are arranged on both sides of the gas diffusion layer 3 in the laminate direction so that they face each other. Between the gas diffusion layer 3 and the separator 5, a gas flow path 7 through which a gas is supplied to the electrode is defined by using an uneven shape.

The sealing member 4 has a rectangular frame shape. Here, the sealing member 4 is bonded to the periphery of the MEA 2 and the gas diffusion layer 3 and the separator 5 with the adhesive layer 6 therebetween, and seals the periphery of the MEA 2 and the gas diffusion layer 3. Here, in the example of FIG. 1, for the sealing member 4, two members separated into upper and lower parts are used, but a single sealing member combining two parts may be used.

During an operation of a fuel cell such as a polymer electrolyte fuel cell, a fuel gas and an oxidant gas each are supplied through the gas flow path 7. Here, the periphery of the MEA 2 is sealed with the sealing member 4 with the adhesive layer 6 therebetween. Therefore, no gas mixing or leakage occurs,

### Examples

Hereinafter, the present disclosure will be described in more detail with reference to examples, but the present disclosure is not limited to the following examples as long as the examples do not depart from the gist thereof.

First, prior to examples and comparative examples, the following rubber composition materials were prepared.
[Rubber (i) (component A)]
   ethylene-butene-diene rubber having an ethylene content of 50 weight%, a butene content of 42.9 weight%, and a diene content of 7.1 weight% (EBT-K-9330M commercially available from Mitsui Chemicals, Inc.)
[Rubber (ii) (component A)]
   ethylene-propylene-diene rubber having an ethylene content of 41 weight%, a propylene content of 45 weight%, and a diene content of 14 weight% (EPT-9090M commercially available from Mitsui Chemicals, Inc.)
[Rubber (iii) (component A)]
   ethylene-propylene-diene rubber having an ethylene content of 49 weight%, a propylene content of 47.5 weight%, and a diene content of 3.5 weight% (Esprene5361 commercially available from Sumitomo Chemical Co., Ltd.)
[Rubber (iv) (component A)]
   ethylene-propylene-diene rubber having an ethylene content of 50 weight%, a propylene content of 40 weight%, and a diene content of 10 weight% (Esprene 505, commercially available from Sumitomo Chemical Co., Ltd.)
[Antioxidant]
   Nocrac NS-5, commercially available from Ouchi Shinko Chemical Industrial Co., Ltd.
[Internal adhesive]
   3-glycidoxypropyltrimethoxysilane (KBM-403, commercially available from Shin-Etsu Chemical Co., Ltd.)
[Carbon black]
   FEF grade carbon black (Seast SO, commercially available from Tokai Carbon Co., Ltd.)
[Plasticizer]
   poly-α-olefin (PAO601, commercially available from NIPPON STEEL Chemical & Material Co., Ltd., 40°C kinematic viscosity: 30.7 mm²/s, pour point (JIS K 2269): -63°C)
[Organic peroxide]
   1,1-di(t-butylperoxy)cyclohexane (Perhexa C-80, commercially available from NOF Corporation, a purity of 80%, one-hour half-life temperature: 111.1°C)
[Crosslinking assistant (i)]
   maleimide compound (Vulnoc PM, commercially available from Ouchi Shinko Chemical Industrial Co., Ltd.)
[Crosslinking assistant (ii)]
   triallyl isocyanurate (TAIC, commercially available from Mitsubishi Chemical Corporation)

In addition, the following adhesives (α1), (α2), and (α3) were prepared as adhesives.

### <<Preparation of adhesive (α1)>>

100 parts by weight of vinyltrimethoxysilane, 68.4 parts by weight of 3-aminopropyltrimethoxysilane, and 33.1 parts by weight of water (1.74 mol per 1 mol of a total substance amount of respective silane coupling agents) were put into a reaction container having a distillation device and a stirrer, and stirred at about 60°C for about 1 hour. Then, an acid such as formic acid was added within 1 hour so that its addition amount was about 0.5 to 2.0 mol per 1 mol of a total substance amount of respective silane coupling agents. The temperature at this time was kept at about 65°C. In addition, the mixture was stirred for 1 to 5 hours, the reaction proceeded, and at the same time, an alcohol produced through hydrolysis was distillated under a reduced pressure. Distillation was terminated when only water remained in the distilled water, dilution and adjustment were then performed so that the silane concentration was 30 to 80 weight%, and thereby a copolymerized oligomer having a molar ratio (Ma/Mb) of 1.17 of a substance amount Ma (mol) of hydrophilic functional groups to a substance amount Mb (mol) of hydrophobic functional groups contained in 1 mol of the molecule was obtained. Here, the hydrophobic functional group was a vinyl group, and the hydrophilic functional group was a silanol group, an alkoxy group, or an amino group.

Then, this copolymerized oligomer was diluted with an alcohol-based organic solvent (methanol, ethanol) so that the concentration was about 5 weight%, and thereby an adhesive (α1) was obtained.

### <<Preparation of adhesive (α2)>>

A copolymerized oligomer having a molar ratio (Ma/Mb) of 1.63 of a substance amount Ma (mol) of hydrophilic functional groups to a substance amount Mb (mol) of hydrophobic functional groups contained in 1 mol of the molecule was obtained in the same procedure as in the copolymerized oligomer for the adhesive (α1) except that 100 parts by weight of vinyltrimethoxysilane, 111.4 parts by weight of 3-aminopropyltrimethoxysilane, and 40.9 parts by weight of water (1.75 mol per 1 mol of a total substance amount of respective silane coupling agents) were used. Here, the hydrophobic functional group was a vinyl group, and the hydrophilic functional group was a silanol group, an alkoxy group, or an amino group.

Then, this copolymerized oligomer was diluted with an alcohol-based organic solvent (methanol, ethanol) so that the concentration was about 5 weight%, and thereby an adhesive (α2) was obtained.

### <<Preparation of adhesive (α3)>>

A copolymerized oligomer having a molar ratio (MalMb) of 0.30 of a substance amount Ma (mol) of hydrophilic functional groups to a substance amount Mb (mol) of hydrophobic functional groups contained in 1 mol of the molecule was obtained in the same procedure as in the copolymerized oligomer for the adhesive (α1) except that 100 parts by weight of vinyltrimethoxysilane, 12.1 parts by weight of 3-aminopropyltrimethoxysilane, and 25.1 parts by weight of water (1.88 mol per 1 mol of a total substance amount of respective silane coupling agents) were used. Here, the hydrophobic functional group was a vinyl group, and the hydrophilic functional group was a silanol group, an alkoxy group, or an amino group.

Then, this copolymerized oligomer was diluted with an alcohol-based organic solvent (methanol, ethanol) so that the concentration was about 5 weight%, and thereby, an adhesive (α3) was obtained.

In addition, the following adhesives (α4) to (α9) were prepared as commercially available adhesives.

### <<Adhesive (α4)>>

CHEMLOK 5151 (commercially available from LORD Far East, Inc.) [a molar ratio (Ma/Mb) of a substance amount Ma (mol) of hydrophilic functional groups to a substance amount Mb (mol) of hydrophobic functional groups contained in 1 mol of the copolymerized oligomer: 1.13, and the hydrophobic functional group was a vinyl group, and the hydrophilic functional group was a silanol group or an alkoxy group]

### <<Adhesive (α5)>>

MEGUM 3290 (commercially available from Dow Chemical Company) [a molar ratio (Ma/Mb) of a substance amount Ma (mol) of hydrophilic functional groups to a substance amount Mb (mol) of hydrophobic functional groups contained in 1 mol of the copolymerized oligomer: 2.70, the hydrophobic functional group was a vinyl group, and the hydrophilic functional group was a silanol group, an alkoxy group, or an amino group]

### <<Adhesive (α6)>>

X-12-1048 (commercially available from Shin-Etsu Chemical Co., Ltd.) [a molar ratio (Ma/Mb) of a substance amount Ma (mol) of hydrophilic functional groups to a substance amount Mb (mol) of hydrophobic functional groups contained in 1 mol of the copolymerized oligomer: 3.00, the hydrophobic functional group was an acryloyl group, and the hydrophilic functional group was a silanol group or an alkoxy group]

### <<Adhesive (α7)>>

KR-513 (commercially available from Shin-Etsu Chemical Co., Ltd.) [a molar ratio (Ma/Mb) of a substance amount Ma (mol) of hydrophilic functional groups to a substance amount Mb (mol) of hydrophobic functional groups contained in 1 mol of the copolymerized oligomer: 0.49, the hydrophobic functional group was an acryloyl group or a methyl group, and the hydrophilic functional group was an silanol group or an alkoxy group]

### <<Adhesive (α8)>>

CHEMLOK607 (commercially available from LORD Far East, Inc.) [a molar ratio (Ma/Mb) of a substance amount Ma (mol) of hydrophilic functional groups to a substance amount Mb (mol) of hydrophobic functional groups contained in 1 mol of the copolymerized oligomer: 3.17, the hydrophobic functional group was a vinyl group, and the hydrophilic functional group was a silanol group, an alkoxy group, or an amino group]

### <<Adhesive (α9)>>

X-12-972F (commercially available from Shin-Etsu Chemical Co., Ltd.) [the functional group in this copolymerized oligomer was only a hydrophilic functional group, and the hydrophilic functional group was a silanol group, an alkoxy group, or an amino group]

### [Example 1]

### (Preparation of rubber composition)

100 parts by weight of rubber (i), 1.0 part by weight of an antioxidant, 50 parts by weight of carbon black, and 15 parts by weight of a plasticizer were kneaded using a banbury mixer at 120°C for 5 minutes. Then, this kneaded product was cooled, 6 parts by weight of a crosslinking agent (an organic peroxide) was then added thereto, and the mixture was additionally kneaded using an open roller at 50°C for 10 minutes to prepare a rubber composition.

### (Production of multilayer body)

A SUS plate (a width of 25 mm, a length of 60 mm, and a thickness of 1.5 mm) formed of SUS304 was prepared as a base material, and the adhesive (α1) prepared above was spray-applied to the surface thereof in a range specified in JIS K 6256-2 so that the thickness after application was about 0.5 µm. Then, the prepared rubber composition and the base material were held using a predetermined mold at 170°C for 15 minutes for crosslinking bonding so that the shape conformed to JIS K 6256-2, and an adhesion evaluation sample (multilayer body) was produced by bonding a rubber molded component having a thickness of 2.0 mm and the base material together with an adhesive layer (a thickness of 0.5 µm) therebetween.

### [Examples 2 to 16 and Comparative Examples 1 to 6]

As the material for the rubber molded component, according to Example 1, respective components shown in Table 1 and Table 2 below were mixed at the ratios shown in the same tables to prepare rubber compositions (in addition, for those containing internal adhesives and crosslinking assistants, these were mixed during kneading with an open roller).

Then, using the rubber compositions, respective base materials and adhesives shown in Table 1 and Table 2 below were used to produce multilayer bodies according to Example 1.

Here, all the base materials shown in Table 1 and Table 2 below had dimensions of a width of 25 mm, a length of 60 mm, and a thickness of 1.5 mm, "SUS" indicates a SUS plate formed of SUS304, "Ti" indicates a titanium plate formed of pure titanium, and "conduction-treated SUS" indicates that a graphite-based conductive film (a thickness of 50 nm) is formed on the surface of the SUS plate by a PVD method. In addition, "conductive resin" indicates a resin base material having the above dimensions obtained by crosslinking a resin composition obtained by mixing 20.4 parts by weight of an o-cresol novolak-type epoxy resin (EOCN-1020-65, commercially available from Nippon Kayaku Co., Ltd., an epoxy equivalent of 198 g/eq), 10.7 parts by weight of a novolak-type phenolic resin (Shonol BRG-566, commercially available from Aica SDK Phenol Co., Ltd., an hydroxyl equivalent of 103 g/eq), and 0.25 parts by weight of 2-phenyl imidazole (2PZ, commercially available from Shikoku Chemical Corporation) with respect to 100 parts by weight of artificial graphite (acicular, spring back 23%, average particle size (d50) 50 µm).

In addition, the adhesives shown in Table 1 and Table 2 below were adhesives (α1) to (α8) prepared and produced previously.

For the multilayer bodies of examples and comparative examples obtained in this manner, properties were evaluated according to the following criteria. These results are shown together in Table 1 and Table 2 below.

### <90°C 168 h acid-resistant adhesion and 90°C 336 h acid-resistant adhesion>

Adhesion evaluation samples (multilayer body) of examples and comparative examples were added to a sulfuric acid aqueous solution adjusted to pH=3.0, and immersed in an sulfuric acid aqueous solution at 90°C for 168 hours (or 336 hours).

Then, the adhesion evaluation sample was taken out from the sulfuric acid aqueous solution, left for one day, and then subjected to a 90° peeling test according to JIS K 6256-2 (2006), and the state of the peeled surface was visually evaluated according to the following adhesion evaluation criteria.

### (Adhesion evaluation criteria)

⊚ (excellent): the total proportion of material failure of the rubber molded component and cohesive failure of the adhesive layer was more than 80%.
o (very good): the total proportion of material failure of the rubber molded component and cohesive failure of the adhesive layer was 50 to 80%.
△ (good): there was material failure of the rubber molded component and cohesive failure of the adhesive layer, but a total proportion was less than 50%.
× (poor): the proportion of interfacial peeling was almost 100%.

### <High-temperature compression permanent strain and low-temperature compression permanent strain>

The rubber compositions (compositions for molding rubber molded components) prepared in examples and comparative examples were held using a predetermined mold at 170°C for 15 minutes according to JIS K 6262, crosslinked and removed from the mold, and then heated in an oven at 150°C for 120 minutes and secondary-crosslinked to produce cylindrical crosslinked rubber samples having a diameter of 29 mm and a thickness of 12.5 mm.

Then, the compression permanent strain of the crosslinked rubber samples was measured according to JIS K 6262, and evaluated according to the following criteria. Here, in the following high-temperature compression permanent strain evaluation, the crosslinked rubber sample was left in an atmosphere at 120°C for 240 hours, and the compression permanent strain was then measured and evaluated, and for the low-temperature compression permanent strain, the crosslinked rubber sample was left in an atmosphere at -40°C for 24 hours and the compression permanent strain was then measured and evaluated.

### (Evaluation criteria for high-temperature compression permanent strain)

⊚ (excellent): the compression permanent strain was less than 20%.
○ (very good): the compression permanent strain was 20 to 25%.
× (poor): the compression permanent strain was more than 25%.

### (Evaluation criteria for low-temperature compression permanent strain)

⊚ (excellent): the compression permanent strain was less than 50%.
○ (very good): the compression permanent strain was 50 to 60%.
× (poor): the compression permanent strain was more than 60%.

**[Table 1]**

| | Example | | | | | | | | | |
|---|---|---|---|---|---|---|---|---|---|---|
| | 1 | 2 | 3 | 4 | 5 | 6 | 7 | 8 | 9 | 10 |
| Rubber molded component material (parts by weight) | | | | | | | | | | |
| Rubber (i) | 100 | - | - | - | - | 100 | 100 | 100 | 100 | 100 |
| Rubber (ii) | - | 100 | - | - | - | - | - | - | - | - |
| Rubber (iii) | - | - | 100 | 100 | 100 | - | - | - | - | - |
| Rubber (iv) | - | - | - | - | - | - | - | - | - | - |
| Antioxidant | 1.0 | 1.0 | 1.0 | 1.0 | 1.0 | 1.0 | 1.0 | 1.0 | 1.0 | 1.0 |
| Internal adhesive | - | - | - | - | - | - | - | - | - | - |
| Carbon black | 50 | 50 | 50 | 50 | 50 | 30 | 25 | 85 | 50 | 50 |
| Plasticizer | 15 | 15 | 15 | 15 | 15 | - | 10 | 30 | 15 | 15 |
| Organic peroxide | 6 | 6 | 6 | 6 | 6 | 6 | 6 | 6 | 6 | 6 |
| Crosslinking assistant (i) | - | - | - | 0.8 | - | - | - | - | - | - |
| Crosslinking assistant (ii) | - | - | - | - | 1.2 | - | - | - | - | - |
| <<Rubber proportion (weight%)>> | 58% | 58% | 58% | 58% | 58% | 73% | 70% | 45% | 58% | 58% |
| <<Filter proportion (weight%)>> | 29% | 29% | 29% | 29% | 29% | 22% | 18% | 38% | 29% | 29% |
| Adhesive type Ma/Mb | α1 1.17 | α1 1.17 | α1 1.17 | α1 1.17 | α1 1.17 | α1 1.17 | α1 1.17 | α1 1.17 | α1 1.17 | α1 1.17 |
| Base material type | SUS | SUS | SUS | SUS | SUS | SUS | SUS | SUS | Ti | conductive resin |
| 90°C 168 h acid-resistant adhesion | ⊚ | ⊚ | ⊚ | ⊚ | ⊚ | ⊚ | ⊚ | ⊚ | ⊚ | ⊚ |
| 90°C 336 h acid-resistant adhesion | ⊚ | ⊚ | ⊚ | ⊚ | ⊚ | ○ | ○ | ○ | ⊚ | ⊚ |
| High-temperature compression permanent strain | ⊚ | ⊚ | ○ | ⊚ | ⊚ | ⊚ | ⊚ | ○ | ⊚ | ⊚ |
| Low-temperature compression permanent strain | ⊚ | ⊚ | ⊚ | ⊚ | ⊚ | ⊚ | ⊚ | ⊚ | ⊚ | ⊚ |

**[Table 2]**

| | Example | | | | | | Comparative Example | | | | | |
|---|---|---|---|---|---|---|---|---|---|---|---|---|
| | 11 | 12 | 13 | 14 | 15 | 16 | 1 | 2 | 3 | 4 | 5 | 6 |
| Rubber molded component material (parts by weight) | | | | | | | | | | | | |
| Rubber (i) | 100 | 100 | 100 | 100 | 100 | 100 | - | - | 100 | 100 | 100 | 100 |
| Rubber (ii) | - | - | - | - | - | - | - | - | - | - | - | - |
| Rubber (iii) | - | - | - | - | - | - | - | - | - | - | - | - |
| Rubber (iv) | - | - | - | - | - | - | 100 | 100 | - | - | - | - |
| Antioxidant | 1.0 | 1.0 | 1.0 | 1.0 | 1.0 | 1.0 | 1.0 | 1.0 | 1.0 | 1.0 | 1.0 | 1.0 |
| Internal adhesive | - | - | - | - | - | - | 5.0 | - | - | - | - | 5.0 |
| Carbon black | 50 | 50 | 50 | 50 | 50 | 50 | 50 | 50 | 50 | 50 | 50 | 50 |
| Plasticizer | 15 | 15 | 15 | 15 | 15 | 15 | 15 | 15 | 15 | 15 | 15 | 15 |
| Organic peroxide | 6 | 6 | 6 | 6 | 6 | 6 | 6 | 6 | 6 | 6 | 6 | 6 |
| Crosslinking assistant (i) | - | - | - | - | - | - | 0.8 | 0.8 | - | - | - | - |
| Crosslinking assistant (ii) | - | - | - | - | - | - | - | - | - | - | - | - |
| <<Rubber proportion (weight%)>> | 58% | 58% | 58% | 58% | 58% | 58% | 56% | 58% | 58% | 58% | 58% | 56% |
| <<Filler proportion (weight%)>> | 29% | 29% | 29% | 29% | 29% | 29% | 28% | 29% | 29% | 29% | 29% | 28% |
| Adhesive type Ma/Mb | α1 1.17 | α2 1.63 | α4 1.13 | α5 2.70 | α6 3.00 | α7 0.49 | α8 3.17 | α8 3.17 | α8 3.17 | α3 0.30 | α9 | α8 3.17 |
| Base material type | conduction-treated SUS | SUS | SUS | SUS | SUS | SUS | SUS | SUS | SUS | SUS | SUS | SUS |
| 90°C 168 h acid-resistant adhesion | ⊚ | ⊚ | ⊚ | ⊚ | ⊚ | ⊚ | ⊚ | △ | △ | △ | × | ○ |
| 90°C 336 h acid-resistant adhesion | ⊚ | ⊚ | ⊚ | ⊚ | ⊚ | ⊚ | × | × | × | × | × | × |
| High-temperature compression permanent strain | ⊚ | ⊚ | ⊚ | ⊚ | ⊚ | ⊚ | × | ⊚ | ⊚ | ⊚ | ⊚ | × |
| Low-temperature compression permanent strain | ⊚ | ⊚ | ⊚ | ⊚ | ⊚ | ⊚ | × | × | ⊚ | ⊚ | ⊚ | ○ |

Based on the results of Table 1 and Table 2, in all the adhesion evaluation samples (multilayer bodies) of examples, excellent adhesion evaluation results were obtained in respective evaluations of "90°C 168 h acid-resistant adhesion" and "90°C 336 h acid-resistant adhesion." In addition, in evaluation of the compression permanent strain in the rubber molded components of examples, in both the high-temperature compression permanent strain and the low-temperature compression permanent strain, excellent evaluation results were obtained.

On the other hand, the adhesion evaluation samples (multilayer bodies) of Comparative Examples 1 to 3 and Comparative Example 6 showed poor acid-resistant adhesion results at a high temperature for a long time (at 90°C for 336 hours) due to use of the adhesive (α8) (a molar ratio (Ma/Mb) of a substance amount Ma (mol) of hydrophilic functional groups to a substance amount Mb (mol) of hydrophobic functional groups contained in 1 mol of the copolymerized oligomer: 3.17). Here, the adhesion evaluation samples of Comparative Example 1 and Comparative Example 6 had excellent "90°C 168 h acid-resistant adhesion" evaluation due to use of the internal adhesive, but had poor compression permanent strain (particularly, the high-temperature compression permanent strain) results.

The adhesion evaluation samples (multilayer bodies) of Comparative Example 4 and Comparative Example 5 showed poor acid-resistant adhesion results at a high temperature for a long time (at 90°C for 336 hours) due to use of the adhesive (α3) (a molar ratio (Ma/Mb) of a substance amount Ma (mol) of hydrophilic functional groups to a substance amount Mb (mol) of hydrophobic functional groups contained in 1 mol of the copolymerized oligomer: 0.30) and the adhesive (α9) (the functional group in this copolymerized oligomer was only a hydrophilic functional group).

Here, while specific embodiments of the present disclosure have been described in the above examples, the above examples are only examples, and should not be construed as limiting. Various modifications apparent to those skilled in the art are intended to be within the scope of the present disclosure.

### [Industrial Applicability]

The multilayer body of the present disclosure is obtained by bonding a sealing member (crosslinked rubber member) onto various base materials with an adhesive layer therebetween, and particularly, can be suitably used as a multilayer body for sealing a fuel cell obtained by bonding a fuel cell base material such as a metal separator and a sealing member together with an adhesive layer therebetween.

### [Reference Signs List]

4b Lip (sealing member)
5 Separator
6 Adhesive layer

## Claims

1. A multilayer body obtained by bonding a base material and a sealing member together with an adhesive layer therebetween,
wherein the sealing member is composed of a rubber composition containing the following component (A), and the adhesive layer is composed of an adhesive composed of the following component (α) as a main component:
(A) a rubber component composed of at least one of ethylene-propylene-diene rubber and ethylene-butene-diene rubber,
(α) a silane coupling agent which is a copolymerized oligomer type silane coupling agent having a hydrophilic functional group and a hydrophobic functional group in which the hydrophilic functional group is the following (a), the hydrophobic functional group is the following (b), and a molar ratio (Ma/Mb) of a substance amount Ma (mol) of the hydrophilic functional group to a substance amount Mb (mol) of the hydrophobic functional group contained in 1 mol of the molecule is 0.33 to 3.00,
(a) at least one functional group selected from the group consisting of a silanol group, an alkoxy group, an amino group, an isocyanate group, an epoxy group, a ureido group, a carboxyl group, and a hydroxy group, and including at least a silanol group or alkoxy group,
(b) at least one selected from the group consisting of a vinyl group, a (meth)acryloyl group, a maleimide group, a methyl group, an ethyl group, a styryl group, a phenyl group, and a mercapto group.

2. The multilayer body according to claim 1,
wherein the rubber component (A) contains ethylene-propylene-diene rubber in which the ethylene content is 50 weight% or less and the propylene content is 42 weight% or more.

3. The multilayer body according to claim 1 or 2,
wherein the rubber component (A) is rubber having a diene content of 3.0 to 15 weight%.

4. The multilayer body according to any one of claims 1 to 3,
wherein the rubber composition further contains a plasticizer having a pour point of - 30°C or lower.

5. The multilayer body according to any one of claims 1 to 4,
wherein the rubber composition further contains carbon black, and the proportion of the rubber component (A) in the entire rubber composition is 40 weight% or more, and the proportion of the carbon black is 15 weight% or more.

6. The multilayer body according to any one of claims 1 to 5,
wherein the rubber composition is a rubber composition containing no silane coupling agent.

7. The multilayer body according to any one of claims 1 to 6, wherein the multilayer body is a member for constituting a fuel cell.
